# EUROPEAN PATENT SPECIFICATION

(11) **EP 1 252 442 B1**
(45) Date of publication and mention of the grant of the patent: **14.04.2004**
(21) Application number: 01908023.3
(22) Date of filing: 31.01.2001
(51) Int. Cl.: F03D 11/00, F16H 57/08, F03D 11/02

(54) **GEAR UNIT**
GETRIEBE
BLOC D'ENGRENAGES

(30) Priority: 31.01.2000 GB 0002122
(43) Date of publication of application: 30.10.2002
(73) Proprietor: HANSEN TRANSMISSIONS INTERNATIONAL NV, 2650 Edegem, Antwerp (BE)
(72) Inventor: DE WILDE, Marcel, Hansen Transmissions Int. NV, B-2650 Edegem (BE); BOGAERT, Roger, Hansen Transmissions Int.NV, B-2650 Edegem (BE); TALBOOM, Rene, Hansen Transmissions Int. NV, B-2650 Edegem (BE)
(74) Representative: Badger, John Raymond
(86) International application number: PCT/IB2001/000211
(87) International publication number: WO 2001/057398

(56) References cited:
- US-A- 5 876 181

## Description

The need for weight reduction in mechanical drives, for example in gear assemblies, and especially those used in wind turbines, has in the past lead to an increased use of planetary gear units.

In a number of applications, more and more lightweight design features are being introduced. The gear transmission of a wind turbine is an application for which a lightweight design is particularly beneficial because reduction in weight of the gear unit mounted at the top of a tower allows a reduction in the strength requirement of the tower.

The planet gear construction, such as shown by Figure 1 or disclosed in US-A-5 876 181, has to strive for an appropriate compromise between conflicting requirements such as:-
a. rim thickness of each planet gear, which is important both in respect of strength and stiffness, and affects both the gear and the bearing performance
b. bearing inner ring internal diameter, which determines the strength and the deflection of the planet carrier studs
c. bearing size and section, with its major effect on bearing life and guiding of the planet gear contact.

In this difficult compromise, relatively thin planet gear rim thicknesses are often used in state-of-the-art planetary stages. However, under some circumstances, the bearing outer ring can as a consequence be found to spin or creep relative to the planet gear. To prevent or inhibit any such movement and to minimise long term wear and fretting corrosion requires careful design and surface conditioning of the planet gear-to-bearing interface.

A particular feature of a gear transmission assembly used in a wind turbine is that it is subjected to a large variation in applied forces due to often rapidly varying winds loads acting on the wind turbine rotors, especially during turbulent wind conditions. The large variation in applied forces causes significant elastic deformation of gear unit components, including the planet and outer bearing ring assembly. This leads to a significant risk of creep of the bearing outer rings.

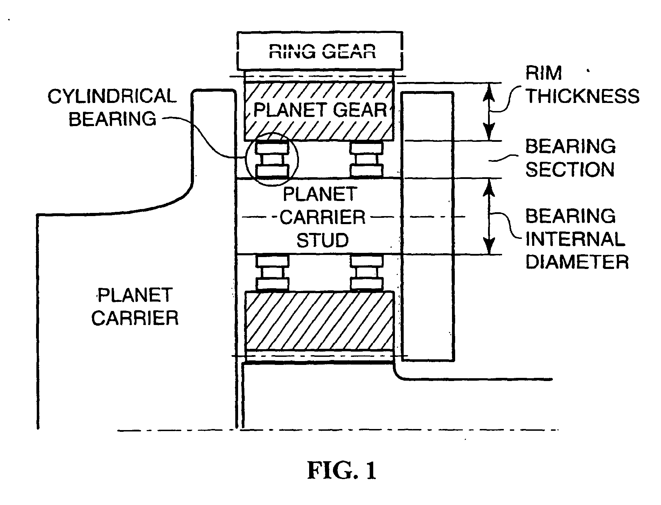

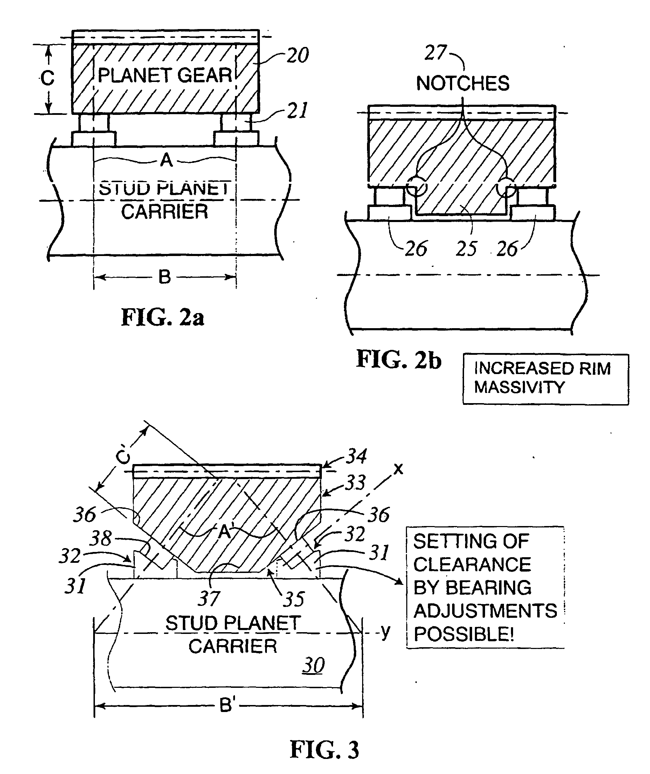

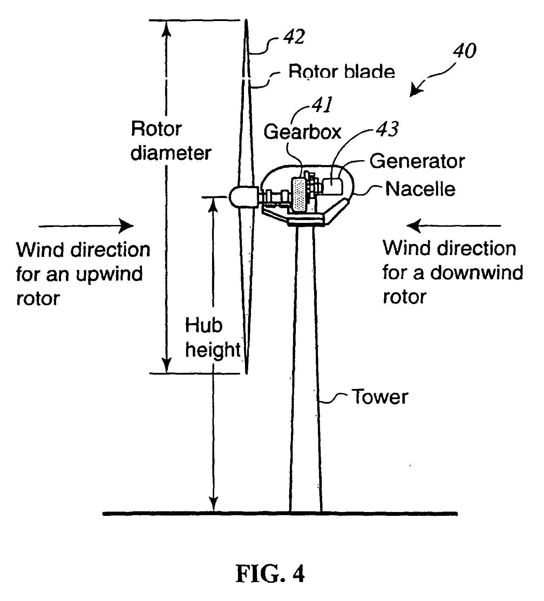

In some cases, state-of-the-art gear units have integrated the bearing partially with the planet gear. Because of the relatively lower contact pressures and the simple cylindrical raceway topography, this has been a successful approach for integration of outer rings of cylindrical or needle bearings with the planet gear, as seen in the example given in Figure 2a in which the planet gears 20 each serve also as a bearing outer ring contacted by the bearing rollers 21. Thus not only a different balance in the above design requirements could be achieved, also the creeping and spinning were eliminated. However, this construction also has disadvantages if adopted for a wind turbine.

Another prior proposal comprises the aforedescribed integration feature of Figure 2a with provision of a central, integrated planet gear section 25 (see Figure 2b) that extends radially inwardly between the axially spaced bearings 26. US-A-5 876 181 further shows a bearing arrangement for supporting the planet carrier with such a central section provided between tapered bearings. In this proposal special care is need to avoid undesirable stress concentration points. In some cases stress relieving notches 27 are provided in corner regions but there remains a potential risk of stress and fatigue probles.

The present invention seeks to provide a gear unit for a wind turbine, a wind turbine gear transmission assembly and a wind turbine assembly in which further improvements are attainable.

In accordance with the present invention there is provided a gear unit for a wind turbine transmission assembly, said gear unit comprising a planet gear stage wherein a planet gear is rotatably supported on a planet carrier by means of two bearings axial spaced relative to the axis of rotation of the planet gear, at least one of said bearings being a tapered bearing.

The outer ring (cup) of the, or each, tapered bearing is integrated with the planet gear. That is, a surface of the planet gear acts as the outer ring of a tapered bearing, for direct contact by the tapered rollers of the bearing.

Preferably the planet gear stage comprises a plurality of planet gears at least some and more preferably all of which are helical gears.

A surface region of the planet gear may be specially treated whereby it is adapted to act as an outer bearing ring (cup).

Preferably each of the said two bearings is a tapered bearing. The axis of rotation of the rollers of the, or each, tapered bearing preferably are inclined such that they intersect the axis of rotation of the plant gear either at a position between the axially spaced bearings or at a position axially beyond the other bearing of the pair.

The invention provides also a wind turbine transmission assembly and a wind turbine which comprises a gear unit in accordance with the present invention.

One embodiment of the present invention will now be described, by way of example only, with reference to Figure 3 which, in common with Figgures 1 and 2, shows part of a gear unit in section in a plane containing the axis of rotation of a planet gear carrier.

A planet gear carrier stud 30 of the epicyclic gear unit of a wind turbine transmission assembly supports the inner bearing rings 31 of a pair of axially spaced taper roller bearings 32. The bearings 32 provide radial and axial support for a planet gear 33 the radially outer section 34 of which is provided with helically extending gear teeth to engage a ring gear.

The radially inner surface 35 of the planet gear 33 comprises two frusto-conical bearing surface zones 36 and a central zone 37 which in this embodiment extends radially inwards of the bearing rollers 38 to a position close to but spaced from the outer surface of the stud 30. In case the zones do intersect zone 37 can be reduced to zero.

The bearing rollers 38 directly contact the frusto conical surface zones 36 of the planet gear. Thus the planet gear may be considered as integrated with the outer rings of two tapered roller bearings. The bearings also are orientated such that in each bearing 32 the rollers reduce in diameter in a direction towards the other bearing of the pair. In this embodiment the axis of rotation X of each bearing roller 38 is inclined to intersect the axis Y of rotation of the planet gear at a position beyond the other bearing of the pair.

The planet carrier stud 30 is provided with a radially outwardly extending abutment (not shown) to provide for axial location of one of the bearings and the other bearing is axially located by an adjustable ring stop (not shown) mounted on the stud 30 and of a kind known per se thereby to allow accurate setting of the bearing pre-load.

Figure 3 shows only a single planet gear 33 but the carrier for carrier stud (30) is provided with at least three studs each having mounted thereon a planet gear and pair of bearings corresponding to those illustrated.

In consequence of the provision of tapered roller bearings in a gear unit having helical type planet gears it is found possible to attain at least some of the following advantages, namely: -
- the contact pressure of the individual roller contacts is better distributed than in prior art constructions because of the inclined direction of loading (compare lines A and A' in Figure 2a and Figure 3) which increases the amount of material available (compare lengths C and C' in Figures 2a and 3) for distributing the load in the interaction with the loads coming from the gears
- increased working distance (B and B' in Figures 2a and 3) because of the inclined working lines A' in O-arrangement of the two tapered bearing results in better stability, for instance versus moments created by the presence of axial forces inherent in the use of helical gears.
- maximum mass (bulk) and stability of the rim section is achieved with no or minimal local stress relieving notches, as exemplified in comparison of Figures 2a, b and Figure 3
- the clearance of the bearing arrangement can be set (Figure 3) for optimal guiding of the gear contact and load distribution in the bearings
- setting of minimal clearance or even preload, together with increased stiffness leads to a high level of precision in positioning of the output shaft both under no load and under load conditions, which can be very important in wind turbine applications.

Figure 4 illustrates a wind turbine 40 comprising a gear box 41 that acts as a transmission assembly to transmit torque from the rotor blades 42 to a generator 43, the gear box 41 comprising an epicyclic gear unit having a planet gear stage as aforedescribed with reference to Figure3.

## Claims

1. A gear unit for a wind turbine assembly, said gear unit comprising a planet gear stage wherein a planet gear (33) is rotatably supported on a planet carrier (33) by means of two bearings (32) axially spaced relative to the axis of rotation of the planet gear, at least one of said bearings being a tapered bearing and said planet gear comprising at least one surface region (36) for contact by rollers (38) of said tapered bearing.

2. A gear unit according to claim 1 and comprising a plurality of planet gears (33) at least some of which are helical gears.

3. A gear unit according to claim 2 wherein each said planet gear (33) is a helical gear.

4. A gear unit according to anyone of the preceding claims wherein said surface region (36) for contact by rollers of the tapered bearing acts as an outer bearing ring surface.

5. A gear unit according to any one of the preceding claims wherein each of said two bearings (32) is a tapered roller bearing and the planet gear comprises a pair of axially spaced frusto conical surfaces (36)respectively for contact by bearing rollers (38) of said two bearings.

6. A gear unit according to any one of the preceding claims wherein the axis (X) of rotation of the rollers of the or each tapered bearing are inclined to intersect the axis (Y) of rotation of the planet gear at a position between the axially spaced bearings or at a position axially beyond the other bearing of the pair.

7. A gear unit according to any one of the preceding claims wherein the planet gear (33) comprises a central zone (37) which extends radially inwards of the bearing rollers (38) of the or each tapered bearing.

8. A gear unit according to any one of the preceding claims wherein the planet carrier (30) comprises adjustable bearing location means for adjustment of the bearing clearance or preload of the or each tapered bearing.

9. A wind turbine transmission assembly comprising a ring gear, a sun gear, and a planet gear stage according to any one of the preceding claims for transmission of torque between said ring gear and sun gear.

10. A wind turbine (40) comprising rotor blades (42) connected to a wind turbine transmission assembly (41) according to claim 9.

## Patentansprüche

1. Getriebeeinheit für eine Windturbinenanordnung,
umfassend eine Planetenradstufe,
bei der ein Planetenrad (33) auf einem Planetenträger (30) durch zwei Lager (32) drehbar gelagert ist, die axial beabstandet sind bezüglich der Rotationsachse des Planetenrades, wobei zumindest eines der Lager ein kegelförmiges Lager ist und das Planetenrad zumindest einen Oberflächenbereich (36) zum Kontakt mit Rollen (38) des kegelförmigen Lagers aufweist.

2. Getriebeeinheit nach Anspruch 1,
umfassend eine Mehrzahl von Planetenrädern (33) , von denen zumindest einige schraubenförmige Getrieberäder sind.

3. Getriebeeinheit nach Anspruch 2,
wobei jedes Planetenrad (33) ein schraubenförmiges Getrieberad ist.

4. Getriebeeinheit nach einem der vorhergehenden Ansprüche,
wobei der Oberflächenbereich (36) zum Kontakt durch Rollen des kegelförmigen Lagers als äußere Lagerringfläche dient.

5. Getriebeeinheit nach einem der vorhergehenden Ansprüche, wobei jeder der beiden Lager (32) ein kegelförmiges Rollenlager ist und das Planetenrad ein Paar axial beabstandeter kegelstumpfartiger Oberflächen (36) jeweils zum Kontakt durch Lagerrollen (38) der beiden Lager umfasst.

6. Getriebeeinheit nach einem der vorhergehenden Ansprüche, wobei die Rotationsachsen (X) der Rollen des oder der einzelnen kegelförmigen Lager geneigt sind, um die Rotationsachse (Y) des Planetenrades an einer Position zwischen den axial beabstandeten Lagern oder an einer Position axial jenseits des anderen Lagers des Paares zu schneiden.

7. Getriebeeinheit nach einem der vorhergehenden Ansprüche, wobei das Planetenrad (33) einen zentralen Bereich (37) umfasst, der sich radial im Inneren der Lagerrollen (38) des oder jedes kegelförmigen Lagers erstreckt.

8. Getriebeeinheit nach einem der vorhergehenden Ansprüche, wobei der Planetenträger (30) einstellbare Lagerpositionierungseinrichtungen umfasst zur Einstellung des Lagerspiels oder der Vorspannung des oder der kegelförmigen Lager.

9. Windturbinengetriebeanordnung umfassend ein Ringzahnrad, ein Sonnenrad und eine Planetenradstufe nach einem der vorhergehenden Ansprüche zur Übertragung des Drehmoments zwischen dem Ringzahnrad und dem Sonnenrad.

10. Windturbine (40) umfassend Rotorflügel (42) , die mit einer Windturbinenübertragungsanordnung (41) nach Anspruch 9 verbunden sind.

## Revendications

1. Bloc d'engrenages destiné à un ensemble de turbine à vent, ledit bloc d'engrenages comprenant un bâti d'engrenage satellite dans lequel un engrenage satellite (33) est supporté avec possibilité de rotation sur un porte-satellites (33) au moyen de deux roulements (32) espacés axialement par rapport à l'axe de rotation de l'engrenage satellite, au moins certains desdits roulements étant un roulement conique et ledit engrenage satellite comprenant au moins une région de surface (36) destinée à entrer en contact avec des rouleaux (38) dudit roulement conique.

2. Bloc d'engrenages selon la revendication 1 et comprenant une pluralité d'engrenages satellites (33) dont au moins certains sont des engrenages hélicoïdaux.

3. Bloc d'engrenages selon la revendication 2, dans lequel chacun desdits engrenages satellites (33) est un engrenage hélicoïdal.

4. Bloc d'engrenages selon l'une quelconque des revendications précédentes, dans lequel ladite région de surface (36) destinée à un contact avec des rouleaux de roulement coniques agit comme surface de bague extérieure de roulement.

5. Bloc d'engrenages selon l'une quelconque des revendications précédentes, dans lequel chacun desdits deux roulements (32) est un roulement à rouleaux conique et l'engrenage satellite comprend une paire de surfaces en tronc de cône axialement espacées (36) respectivement en vue d'un contact avec des rouleaux de roulement (38) desdits deux roulements.

6. Bloc d'engrenages selon l'une quelconque des revendications précédentes, dans lequel l'axe (X) de rotation des rouleaux du roulement conique ou de chaque roulement conique sont inclinés pour recouper l'axe (Y) de rotation de l'engrenage satellite à une position entre les roulements espacés axialement ou bien à une position axialement au-delà de l'autre roulement de la paire.

7. Bloc d'engrenages selon l'une quelconque des revendications précédentes, dans lequel l'engrenage satellite (33) comprend une zone centrale (37) qui s'étend radialement vers l'intérieur des rouleaux de roulement (38) du roulement conique ou de chaque roulement conique.

8. Bloc d'engrenages selon l'une quelconque des revendications précédentes, dans lequel le porte-satellites (30) comprend un moyen de localisation de roulement ajustable destiné à l'ajustement du jeu du roulement ou de la précharge du roulement ou de chaque roulement conique.

9. Ensemble de transmission de turbine à vent comprenant une couronne, une roue solaire, et un bâti d'engrenage satellite selon l'une quelconque des revendications précédentes, destiné à la transmission d'un couple entre ladite couronne et la roue solaire.

10. Turbine à vent (40) comprenant des lames de rotor (42) reliées à un ensemble de transmission de turbine à vent (41) selon la revendication 9.
